# EUROPEAN PATENT APPLICATION

(11) **EP 1 435 308 A1**
(43) Date of publication of application: **07.07.2004**
(21) Application number: 04002406.9
(22) Date of filing: 26.07.2001
(51) Int. Cl.: B60N 2/28

(54) **Seat belt with load leg**

(62) Divisional of application: 01118100.5
(71) Applicant: GRACO CHILDREN'S PRODUCTS INC., Elverson, PA 19520 (US)
(72) Inventor: Pacella, Jonathan M., Honey Brook PA 19344 (US); Longenbecker, Michael L., Ephrata PA 17522 (US); Carpenter, Jason A., Reinholds PA 17569 (US)
(74) Representative: Neunert, Peter Andreas

(57) **Abstract**

The present invention relates to a seat arrangement in accordance with claim 1, having a seat base 100 to which a seat can be selectively engaged and disengaged, a load leg 200 extending from one end of the seat base 100 for engaging a vehicle floor, and a lock off device 300 for a seat belt, the lock off device comprising:
an inner member 302 fixed to a surface of the seat base; and an outer member 304 having one end immovably integral with one end of the inner member 302 and superimposed over the inner member 302 so that a tapering clearance, into which a seat belt webbing can be easily slid, is established between the free end of the outer member 304 and a corresponding end of the inner member 302.

## Description

### BACKGROUND OF THE INVENTION

### Field of the Invention

The present invention relates generally to a seat arrangement having a seat base to which a seat can be selectively engaged and disengaged, a load leg extending from one end of the seat base for engaging a vehicle floor, and a lock- off device for a seat belt.

### SUMMARY OF THE INVENTION

The present invention provides a seat base that includes a lock-off device to easily capture and securely hold a vehicle shoulder belt in position relative to the seat base to retain the seat base on the vehicle seat.

The seat base includes alligator clamp-like members, one on either side of the base, to clamp a vehicle shoulder belt to the seat base and prevent the belt from slippling along the belt's axial direction. The clamp-like members thus secure the seat base to the vehicle seat via the vehicle belt.

This seat arrangement comprises an easy to use lock-off device (300), which is adapted to receive a vehicle belt and to clamp the belt against movement in its axial direction. This lock-off device (300) comprises a clamp having inner and outer members (302,304) which are operatively connected with one another such that webbing of a vehicle belt, when slid and clamped between the inner and outer members, is prevented from sliding along its length.

In more detail, the inner member (302) of the above lock-off device is fixed to a surface of the base member (100), while the outer member (304) has one end immovably fastened to one end of the inner member (302) and is superimposed over the inner member so that a seat belt receiving clearance is established between the free end of the outer member (304) and a corresponding end of the inner member (302).

The invention resides in a seat arrangement having a base member (100) to which a child's seat can selectively be attached and detached, a load leg (200) extending from one end of the base member (100) for engagement with a floor of the vehicle, and a lock-off device (300) for a seat belt, the lock-off device being characterized by an inner member (302) fixed to a surface of the base member (100); and an outer member (304) having one end immovably integral with one end of the inner member (302) and superimposed over the inner member (302) so that a tapering clearance, into which seat belt webbing can be easily slid, is established between the free end of the outer member (304) and a corresponding end of the inner member (302).

This seat arrangement is further characterized in that the load leg (200) is pivotally mounted to the base member (100). In addition, the load leg (200) is adjustable in length.

To facilitate deployment of the load leg (200), the load leg (200) is provided with a latch mechanism (216) to permit the load leg (200) to be locked at a selected length. In accordance with this aspect, this latch mechanism (216) has at least one pivotal latch member (218) that selectively engages openings (212A) formed in a strut (212) reciprocatively mounted in a housing (214) also forming part of the load leg (200).

Further, the load leg (200) includes a fold latch arrangement (232, 236) which holds the load leg (200) in an operative position until the load leg (200) is manually released. This fold latch arrangement (232, 236) comprises a lock member (236) that protrudes through an opening (236) formed in the base member (100) and locks the load leg (200) against pivotal movement until the lock member (236) manually depressed to a level whereat engagement between the lock member and the base member is absent.

### BRIEF DESCRIPTION OF THE DRAWINGS

The various aspects and attendant advantages of the present invention will become more clearly appreciated as a detailed description of an embodiment of the present invention and alternate arrangements, is given with reference to the appended drawings in which:
- Fig. 1 is an exploded perspective view of a seat supporting base member and a load leg according to an embodiment of the present invention;
- Fig. 2 is a side elevation view showing the load leg locked in an operative supporting position with respect to the base member;
- Fig. 3 is a perspective view similar to that shown in Fig. 2, depicting topographical features of the base member;
- Fig. 4 is a front elevation view showing the load leg locked in its operative supporting position with respect to the base member;
- Fig. 5 is a bottom view of the base member with the load leg locked in its operative supporting position;
- Fig. 6 is an inverted perspective view showing the lower surface of the base member and the manner in which the load leg arrangement folds against the lower surface of the base member;
- Fig. 7 is an top view of the base member; and
- Fig. 8 is a front view of the load leg with a front half of the load leg housing removed to show features of the latch mechanism that enables telescopic adjustment of the load leg length.

### DETAILED DESCRIPTION OF THE PREFERRED EMBODIMENTS

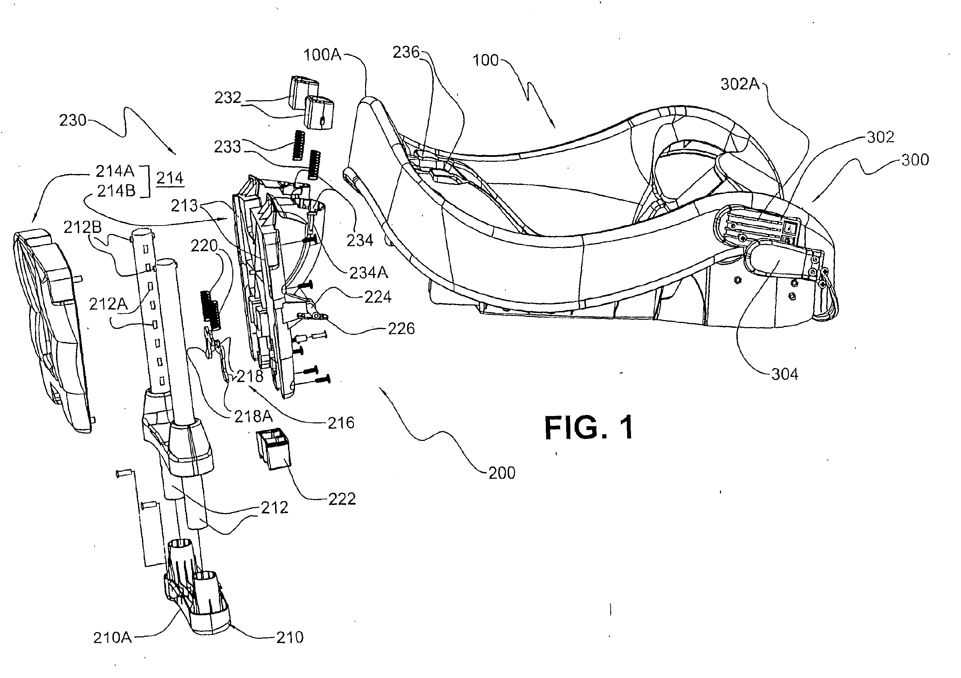

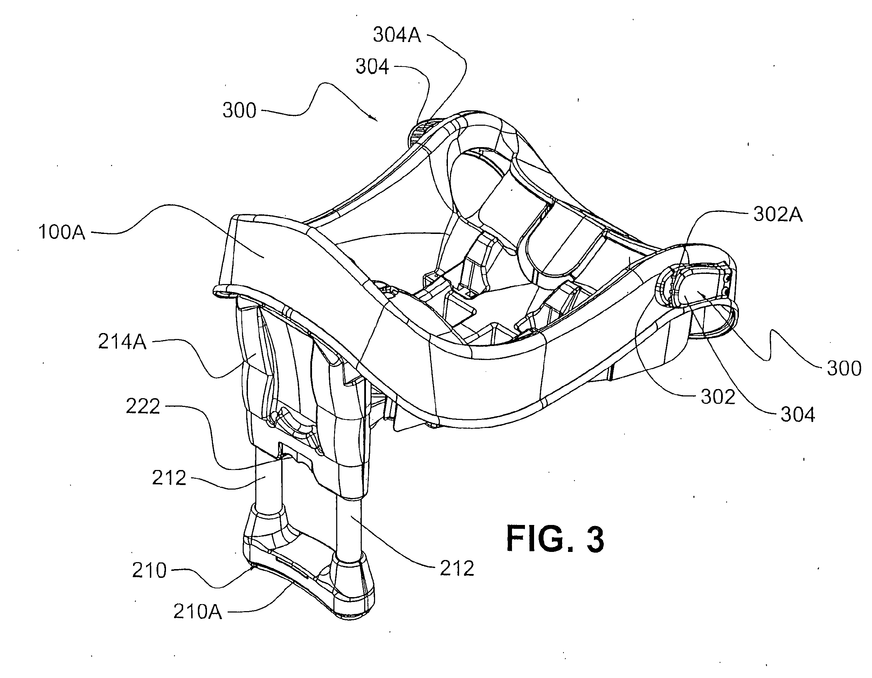

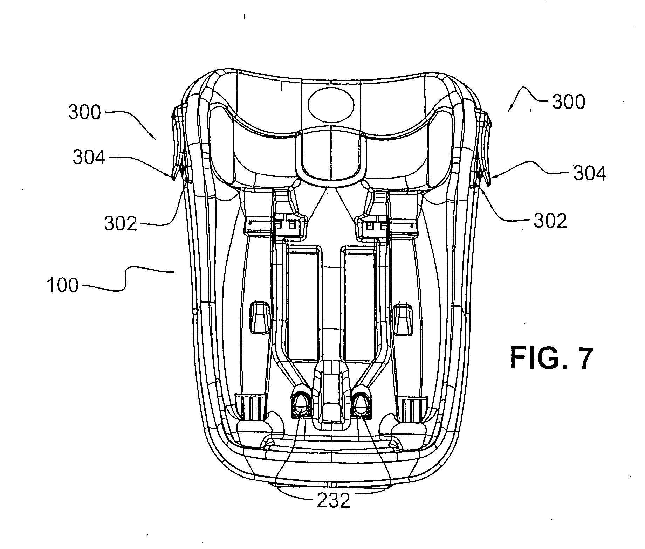

Figs 1-8 show an embodiment of a seat arrangement for use in a vehicle in accordance with the invention. The seat arrangement can be used in any vehicle equipped for carrying an infant, toddler or child seats, including automobiles, sport utility vehicles, vans, trucks, planes, buses, trains, boats, and the like. This seat arrangement generally comprises a seat supporting base member 100 to which a child's seat (not shown) can be selectively engaged and disengaged. The base member 100 includes a load leg 200. The load leg 200 is pivotally mounted to a forward end 100A of the base member 100 and includes a foot member 210. The foot member 210 can have a curved lower surface 210A adapted to rest on top of a transmission tunnel of an automotive vehicle (neither shown) so that the base member 100 can be stably secured to the middle of the vehicle's rear seat at a location which is optimally located to minimize injury to a child in a side impact/collision. Although the central portion of the lower surface 210A of the foot 210 curves, the lower surface 210A becomes generally planar at either side so that, when the base member 100 is placed on the left- or right- side of the vehicle's rear seat, the foot 210 can balance on the flat surface of the rear floor pan of the vehicle and can spread out the force translated from the child's seat to the base member 100 in the event of a front collision. The foot 210 can be molded from polypropylene, polycarbonate or the like.

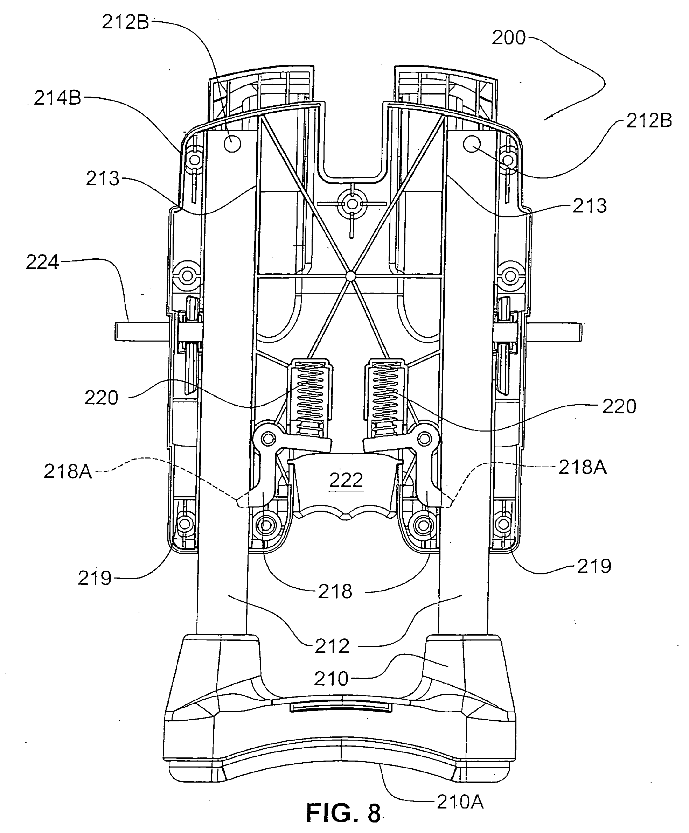

A pair of struts 212, which can be hollow tubes, for example, extend up from the foot 210 and are slidably received within channels 213 molded into a load leg housing 214. The housing 214, as show in Fig. 1, consists of front and rear halves 214A, 214B that are secured together with a plurality of un-numbered fastener elements and guides. The tubular struts 212 slide in and out of the housing 214 within predetermined limits. A latch mechanism, generally denoted by the numeral 216, is mounted in the housing 214 in the manner best seen in Fig. 8.

The latch mechanism 216, as shown in Fig. 8, includes a pair of pawl-like pivotal latch members 218 with teeth 218A that engagingly extend into one of series of openings 212A formed along the inboard edges of the tubular struts 212. The latch members 218 are spring loaded by compression springs 220 so as to be constantly biased to pivot in a direction wherein the teeth 218A engage opposed openings 212A. A single, manually operable, button-like adjustment handle or member 222 is arranged to engage the latch members 218. Displacement of the adjustment handle 222 against the bias of the springs 220 (in Fig. 8, upward) induces the pivoting movement of the latch members 218 in a direction which retracts the teeth from the openings 212A. Once the teeth 218A are retracted from the openings 212A, the tubular struts 212 can be slidably adjusted up (or down) relative to the housing 214. Release of the adjustment handle 222 permits the latch members 218 to pivot back in an engaging direction and to re-engage in the appropriate openings 212A. Although actuation of the adjustment handle 222 is necessary for upward movement of the struts 212 (to shorten the load leg), the struts 212 can be moved downward (to lengthen the load leg) without actuating the handle 222 by pulling on foot 210 in a direction away from the base member 100 with enough force to cause the teeth 218A to release from the openings 212A. The teeth 218A then slide along the inboard sides of the struts 212 until they reach the next set of opposed openings 212A, at which time they pivot into engagement in those openings 212A. The struts 212 can be ratcheted down in this manner until the load leg has been sufficiently lengthened. As shown in Figs. 1 and 8, the struts 212 include retention bushings 212B that prevent the struts 212 from being pulled out of the lower end of the channels 213 in the load leg housing 214. The struts 212 can be pulled downward, away from the base member 100, only until bushings 212B contact ribs 219 formed in the channels 213.

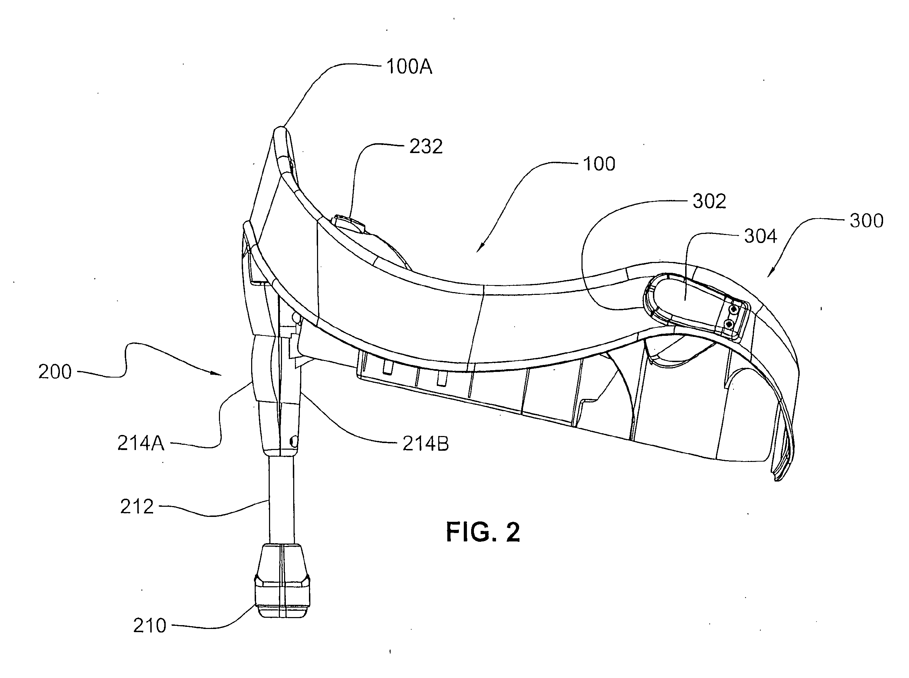

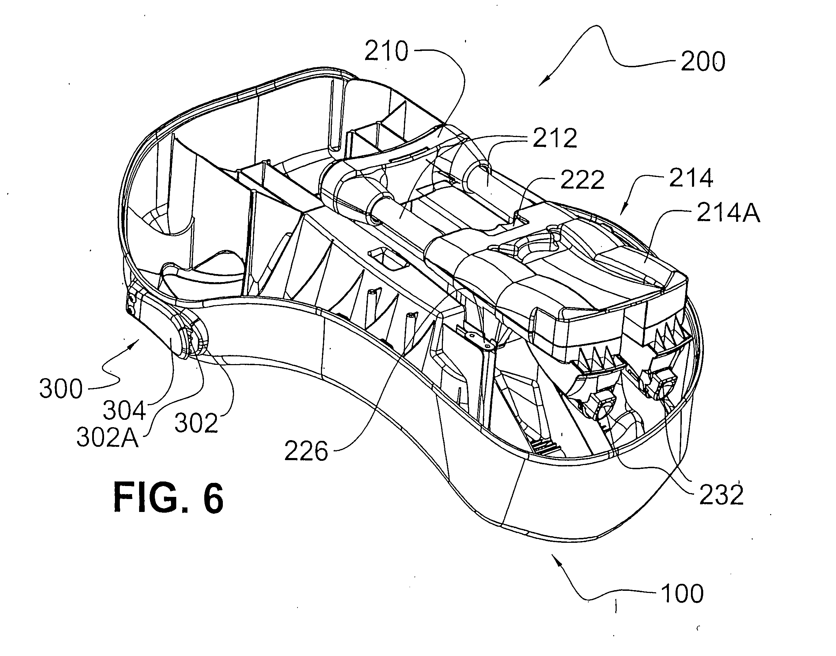

The housing 214 of the load leg 200 is pivotally supported on a pivot shaft or tube 224 which is rigidly connected at both ends to the underside of the base member 100 by way of connection brackets 226. A fold latch arrangement 230, indicated generally in Fig. 1, is provided as part of the housing 214 of the load leg 200. In this embodiment, the arrangement 230 takes the form of a pair of spring loaded block-like lock members 232 that are respectively arranged to project through a pair of openings 236 formed in the base member 100 when the load leg 200 is pivoted to its operative position, as seen in Fig. 2. Engagement between the sides of the lock members 232 and the edges of the openings 236 restrains the load leg 200 against pivotal movement. The load leg 200 is maintained in this operative position until such time as the lock members 232 are manually depressed to a level where engagement with the edges of the openings 236 is lost, and resistance to pivotal movement is removed. Under these conditions, the load leg 200 can be folded back to its stored position illustrated in Fig. 6.

More specifically, as shown in Fig. 1, the above-mentioned lock members 232 of this embodiment each comprise a hollow molded member which is configured to receive one end of a compression spring 233. The lock members 232 also are slidably disposed in recesses 234 which are molded into the rear half 214B of the load leg housing 214. The lock members 232 each are formed with small retention barbs 232A on each side. The lock members 232 are pressed into the recesses 234, and barbs 232A are received in slots 234A. Engagement between the upper end of the slots 234A and the barbs 232A limits the maximum degree of projection of each of the lock members 232 and retains them in the recesses 234.

In one embodiment, the lock members 232 are made of nylon, while the front and rear halves 214A, 214B of the load leg housing 214 are molded from polypropylene, polycarbonate or the like. It is preferable to form the sliding lock members 232 of a different material from that of the housing 214 so that the lock members 232 can slide easily along the recess walls. Nylon (or similar material) provides suitable self-lubricating properties and ensures reliable operation of the lock members 232. The single, manually operable, button-like adjustment handle or member 222 which is associated with the latch members 218 is, in this embodiment, also made of nylon for the same reason.

The rear or aft end of the base member 100 (viz., an end of the base member distal from that at which the load leg 200 is pivotally mounted) is provided with a pair of lock-off members 300. The lock off members 300 are located on either side of the base member 100 and are adapted to receive and grip seat belt webbing (not shown) of a vehicle shoulder belt. Once the seat belt is pulled into a lock off member 300, it is gripped in a manner which strongly inhibits sliding of the belt along its length or axial direction. A lock off member 300 is provided on either side of the base member 100 so that the base member 100 can be used on either side of, or in the middle of, a vehicle. In addition, the lock off members 300 are operative with either a 2-point or 3-point adult seat belt.

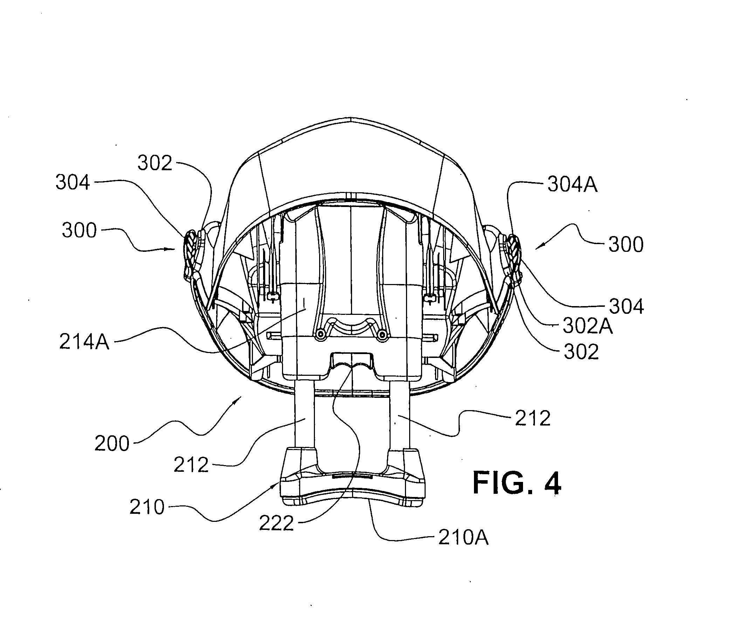

The lock off devices 300 each include inner and outer members 302, 304. As best seen in Fig. 1, the inner member 302 is fixed to the base member 100, such as by bolts or nylock nuts, so as to be restrained against any movement relative to the base member 100. The outer member 304, on the other hand, is secured only at one end to the inner member 302 via bolts and nylock nuts, for example. This cantilevered attachment endows the outer member 304 with the ability to flex relative to the inner member 302 by a small amount and to act as a type of non-adjustable alligator clamp. A tapered clearance is defined between the "jaws' of this arrangement into which a seat belt can be pulled and easily wedged. The inboard surfaces of the inner and outer members 302, 304 additionally are provided with ribs or splines 302A, 304A which interleave and overlap by amounts selected so that, when seat belt webbing is slid between the inner and outer members, it is gripped and forced into a gently serpentine configuration to produce sufficient friction that movement of the seat belt webbing along its axial length direction is prohibited. The interleaving of the ribs 302A, 304A can be seen in Fig. 4.

While the present invention has been described with reference to one embodiment/arrangement, it will be understood that the present invention is not limited thereto and, as will be readily appreciated by the person of skill in the art to which the present invention pertains, given the preceding disclosure, can be modified without departing from the scope and spirit of the invention.

In one alternative embodiment, for example, while the two tubular struts have been described as being latched and unlatched via the use of a single manually manipulable member, i.e. element 222, the invention is not limited to this arrangement. Although member 222 simplifies the adjustment operation, the present invention can have an individually operable latch operating member associated with each of the tubular legs, if so desired.

In addition, in another alternative embodiment, the latch members 218, while being described as being associated with separate compression spring members, could be replaced with latch members that have integrally arranged springs, such as leaf spring arrangements which are integrally or unitarily formed with the latch members. The latch members 218 are preferably formed of metal for the purposes of strength and safety. Alternatively, they can include a plastic covering which encompasses the integral leaf spring arrangement.

In a further alternative embodiment, the fold latches 230 can be replaced with a single resiliently biased member. Or, they can be replaced with a different arrangement, wherein the pivot shaft or shafts about which the load leg pivots can be supported by a pair of opposed L-shaped slots formed in the load leg housing, and wherein the upper end of the load leg housing is arranged to be inserted into a socket or recess in the lower surface of the base member of sufficient depth and size so as to lock the load leg in its operative support position. Folding of the leg in this different embodiment can be achieved by pulling the load leg vertically downward so that pivot shaft(s) slides down the vertical leg of the L-shaped slots. The L-shaped slots are selected to have a length which allows the load leg housing to clear the socket or recess. At this stage the load leg would be released and rendered pivotal. The load leg could then be maneuvered so that the pivot shaft is moved along the horizontal leg of the L-shaped groove, and the load leg assumes a folded stored configuration with respect to the base member.

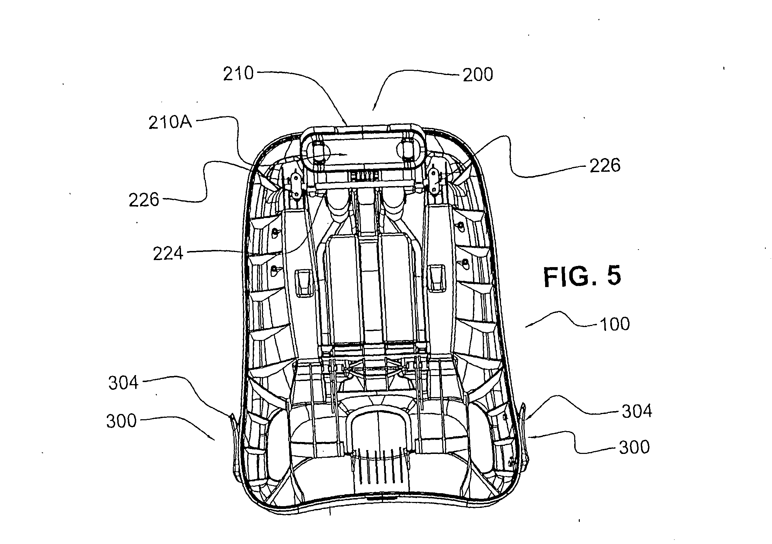

Further, while Figs. 1-8 illustrate a seat supporting base member 100 having a particular shape, the load leg of the present invention can be used with base members of different configurations. For example, the load leg can be employed on a base member with a differently-contoured upper surface to which a child's seat can be attached or with different height, width, and length dimensions. Also, the reinforcing ribs on the lower side of the base member, seen most clearly in Fig. 5, can be arranged differently in other embodiments of the base member.

The lock off devices, while being disclosed as similar to alligator jaw-like clamps, can be replaced with devices wherein the outer member-is pivotally mounted and adapted to snap snugly down on the inner member or the like, without departing from the broadest aspects of the invention.

## Claims

1. A seat arrangement having a seat base (100) to which a seat can be selectively engaged and disengaged, a load leg (200) extending from one end of the seat base (100) for engaging a vehicle floor, and a lock off device (300) for a seat belt, the lock off device comprising:
• an inner member (302) fixed to a surface of the seat base; and
• an outer member (304) having one end immovably integral with one end of the inner member (302) and superimposed over the inner member (302) so that a tapering clearance, into which a seat belt webbing can be easily slid, is established between the free end of the outer member (304) and a corresponding end of the inner member (302).

2. A seat arrangement as set forth in claim 1, wherein the load leg (200) is pivotally mounted to the seat base (100).

3. A seat arrangement as set forth in claim 2, wherein the load leg (200) is adjustable in length.

4. A seat arrangement as set forth in claim 3, wherein the load leg (200) is provided with a latch mechanism (216) to permit the load leg to be locked at a selected length.

5. A seat arrangement as set forth in claim 3, wherein the load leg has a housing (214), and the latch mechanism (216) has at least one pivotal latch member (218) which selectively engages in openings (212A) formed in a strut (212) reciprocatively mounted in the housing (214).

6. A seat arrangement as set forth in claim 3, further comprising a fold latch arrangement (232, 236) which holds the load leg (200) in an operative position until manually released.

7. A seat arrangement as set forth in claim 6, wherein the fold latch arrangement (232, 236) comprises a lock member (236) which protrudes through an opening (236) formed in the seat base and which locks the load leg (200) against pivotal movement until manually depressed to a level whereat engagement between the lock member and the seat base is absent.

8. A seat arrangement as set forth in claim 1, wherein the bottom of load leg (200) is provided with a foot (210) having a curved surface (210A) adapted to seat on a curved surface of a transmission tunnel hump of an automotive vehicle.

9. A seat arrangement as set forth in claim 1, wherein the load leg (200) has a housing (214) and at least one telescopically mounted strut (212) which is slidably received in the housing (214).
